# EUROPEAN PATENT APPLICATION

(11) **EP 4 834 835 A1**
(43) Date of publication of application: **04.11.2026**
(21) Application number: 23962831.6
(22) Date of filing: 29.12.2023
(51) Int. Cl.: C01B 32/205

(54) **GRAPHITE NEGATIVE ELECTRODE MATERIAL, PREPARATION METHOD THEREFOR, AND LITHIUM ION BATTERY**

(71) Applicant: Shanghai Shanshan New Material Co., Ltd, Shanghai 201306 (CN)
(72) Inventor: CHU, Xiaomin, Shanghai 201306 (CN); LI, Fuying, Shanghai 201306 (CN); ZHANG, Hua, Shanghai 201306 (CN); HUANG, Yufu, Shanghai 201306 (CN)
(74) Representative: karo IP
(86) International application number: PCT/CN2023/143397
(87) International publication number: WO 2025/138157

(57) **Abstract**

A graphite negative electrode material, a preparation method therefor, and a lithium-ion battery. The preparation method comprises: selecting a raw material, the raw material being petroleum coke, or needle coke, or a mixture of petroleum coke and needle coke, and the proportion of mosaic structures in the raw material being 30%-80%; performing crushing treatment and shaping treatment on the raw material to form a first powder; performing heat treatment on the first powder to form a second powder; and performing graphitization treatment on the second powder to form a single-particle graphite negative electrode material, the relation between the Raman median L of the graphite negative electrode material and the degree of graphitization G of the graphite negative electrode material being: 1.5<80(L-G/17)<6.

## Description

### TECHNICAL FIELD

This application relates to the field of lithium-ion batteries, and in particular to a graphite negative electrode material and a preparation method thereof, and a lithium-ion battery.

### BACKGROUND

In recent years, global temperatures have continued to rise. To address the changes of climate warming, countries around the world are transforming their energy structures toward low carbonization. Large-scale utilization of renewable energy is an important pathway for low-carbon transformation, and renewable energy includes, for example, wind renewable energy and solar renewable energy. Since renewable energy power generation has the characteristic of intermittency, with the extensive increase of wind renewable energy and solar renewable energy projects, the demand of power systems for power ancillary services such as smooth output, peak shaving, and frequency regulation is also growing rapidly. The importance and urgency of energy storage are increasingly prominent.

Along with the rapid expansion of new energy installed capacity, new-type energy storage dominated by electrochemical energy storage has developed rapidly in recent years, and the installed capacity proportion continues to increase. After years of development, lithium-ion batteries, from the perspective of comprehensive performance and technological maturity, have become the battery system with the best comprehensive performance at present, possessing the conditions for large-scale promotion.

Among lithium-ion batteries, graphite negative electrode material is the most widely used negative electrode material. Rapidly developing graphite negative electrode materials suitable for use in energy storage systems has become an urgent task.

### SUMMARY

One aspect of this application provides a preparation method of a graphite negative electrode material, comprising: selecting a raw material, the raw material being petroleum coke or needle coke or a mixture of petroleum coke and needle coke, and the proportion of mosaic structures in the raw material being 30%-80%; performing crushing treatment and shaping treatment on the raw material to form a first powder; performing heat treatment on the first powder to form a second powder; performing graphitization treatment on the second powder to form a single-particle graphite negative electrode material, the relationship between the Raman median L of the graphite negative electrode material and the degree of graphitization G of the graphite negative electrode material being: 1.5<80(L-G/17)<6.

In some embodiments of this application, the volatile matter of the raw material is 4-13%, the ash content is ≤0.5%, and the sulfur content is ≤1.5%.

In some embodiments of this application, the grindability index of the raw material is 60-120.

In some embodiments of this application, the first median particle diameter of the first powder is D₁50, the first sphericity is Q₁50, the first width-to-length ratio is K₁50, then: 3<(D₁50+1+15Q₁50)/6<5; 0<(D₁50-150(K₁50-0.6))<8.

In some embodiments of this application, the convexity of the first powder is T₁50, then: 5<(D₁50+25T₁50)/7<8.

In some embodiments of this application, the second median particle diameter of the second powder is D₂50, the second sphericity is Q₂50, the second width-to-length ratio is K₂50, then: 3<(D₂50+1+125(Q₂50-0.75))/6<5; 0<[D₂50-162(K₂50-0.62)]<6.

In some embodiments of this application, the second convexity of the second powder is T₂50, then: 4<(D₂50×8+85T₂50)/29<7.

In some embodiments of this application, the relationship between the Raman median L of the graphite negative electrode material and the electrode sheet OI value I of the graphite negative electrode material needs to satisfy: 3<(I/5+20L)<5; and/or the relationship between the Raman median L of the graphite negative electrode material and the reversible specific capacity R of the graphite negative electrode material needs to satisfy: 0<(0.15/L-LR/64)<3.

In some embodiments of this application, the equipment for the graphitization treatment is an Acheson crucible furnace, and the process conditions of the graphitization treatment are: a power supply time of 30h to 50h, and a power consumption of 30000 to 48000 Kwh.

In some embodiments of this application, in the process of the graphitization treatment, the power supply starts increasing from an initial power, and after increasing to a set power, the set power is maintained for a specific time until the power consumption is reached, wherein the initial power supply is 1500 Kw-4000 Kw, the rate of increase of the power supply is 300-1200 kw/h, the set power is 10000 Kw-15000 Kw, and the specific time is greater than one third of the total power supply time.

Another aspect of the embodiments of this application provides a graphite negative electrode material, wherein the relationship between the Raman median L of the single-particle graphite negative electrode material and the degree of graphitization G of the graphite negative electrode material needs to satisfy: 1.5<80(L-G/17)<6.

In some embodiments of this application, the relationship between the Raman median L of the graphite negative electrode material and the electrode sheet OI value I of the graphite negative electrode material needs to satisfy: 3<(I/5+20L)<5.

In some embodiments of this application, the relationship between the Raman median L of the graphite negative electrode material and the reversible specific capacity R of the graphite negative electrode material needs to satisfy: 0<(0.15/L-LR/64)<3.

The embodiments of this application further provide a lithium-ion battery, comprising a negative electrode, the negative electrode being made from any one of the negative electrode materials according to the embodiments of this application.

Compared with the prior art, the preparation method of the graphite negative electrode material according to the embodiments of this application subjects the raw material to crushing treatment and shaping treatment, heat treatment, and graphitization treatment to form a single-particle graphite negative electrode material. Through the screening of the raw material, the proportion of mosaic structures in the raw material is selected to be 30%-80%, so that the relationship between the Raman median L of the formed graphite negative electrode material and the degree of graphitization G of the graphite negative electrode material is: 1.5<80(L-G/17)<6.

Further, during the preparation process of the single-particle graphite negative electrode material, by matching the relationships among the sphericity, convexity, width-to-length ratio, and median particle diameter of the formed first powder and second powder, the shape of the prepared graphite negative electrode material is more spherical, with a smooth and complete surface, rounded, and fewer tips. Such a graphite negative electrode material, when applied in a lithium battery, has fewer active sites and fewer side reactions, thereby enabling the lithium battery to have superior high-temperature, storage, and long-cycle performance.

Further, by matching the relationship between the Raman median and the degree of graphitization of the single-particle graphite negative electrode material, the relationship between the Raman median and the OI value, and the relationship between the Raman median and the reversible specific capacity, the internal grain integrity of the graphite negative electrode material is ensured to be high, the interlayer spacing is large, and the surface defects are few and the degree of disorder is low, so that the negative electrode material has sufficient kinetic performance during the charge-discharge process and will not undergo cycle degradation due to lithium plating; the charge-discharge cycle performance, storage capability, and high-temperature resistance of the cell products made using the graphite negative electrode material are superior, and the comprehensive performance is well achieved.

By matching the relationship between the median particle diameter of the graphite negative electrode material and the specific surface area of the graphite negative electrode material, the specific surface area of the graphite negative electrode material is controlled, so that the cells made using the graphite negative electrode material have good SEI film stability during cycling, while also having a high reversible specific capacity and compaction, and when applied in lithium batteries, have the characteristic of long life.

### BRIEF DESCRIPTION OF DRAWINGS

The following drawings describe in detail the exemplary embodiments disclosed in this application. The same reference numerals in the several views of the drawings indicate similar structures. Those skilled in the art will understand that these embodiments are nonlimiting and exemplary, and the drawings are only for the purpose of illustration and description, and are not intended to limit the scope of this application. Embodiments in other manners may also accomplish the inventive intent of this application. It should be understood that the drawings are not drawn to scale. Wherein:
FIG. 1 is a schematic flow chart of the preparation method of the graphite negative electrode material according to an embodiment of this application.
FIG. 2 is an image of the raw material with mosaic structures under an optical microscope.

### DETAILED DESCRIPTION OF EMBODIMENTS

The following description provides specific application scenarios and requirements of this application, and is intended to enable those skilled in the art to make and use the contents of this application. For those skilled in the art, various partial modifications to the disclosed embodiments will be apparent, and the general principles defined herein can be applied to other embodiments and applications without departing from the spirit and scope of this application. Therefore, this application is not limited to the shown embodiments, but is consistent with the broadest scope of the claims.

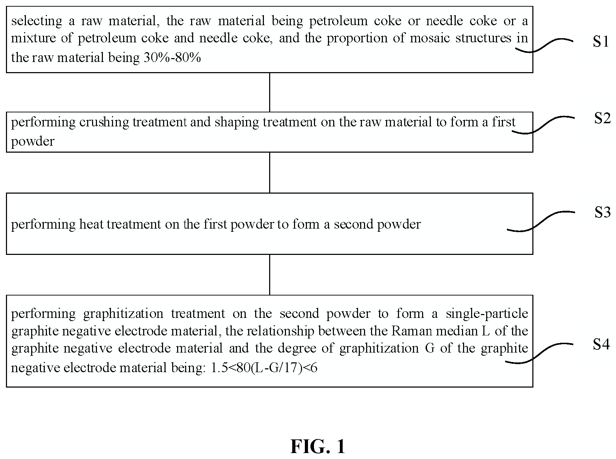

The embodiments of this application provide a preparation method of a graphite negative electrode material, as shown in FIG. 1, comprising:
Step S1, selecting a raw material, the raw material being petroleum coke or needle coke or a mixture of petroleum coke and needle coke, and the proportion of mosaic structures in the raw material being 30%-80%;
Step S2, performing crushing treatment and shaping treatment on the raw material to form a first powder;
Step S3, performing heat treatment on the first powder to form a second powder;
Step S4, performing graphitization treatment on the second powder to form a single-particle graphite negative electrode material, the relationship between the Raman median L of the graphite negative electrode material and the degree of graphitization G of the graphite negative electrode material being: 1.5<80(L-G/17)<6.

Each process step is further described in detail below.

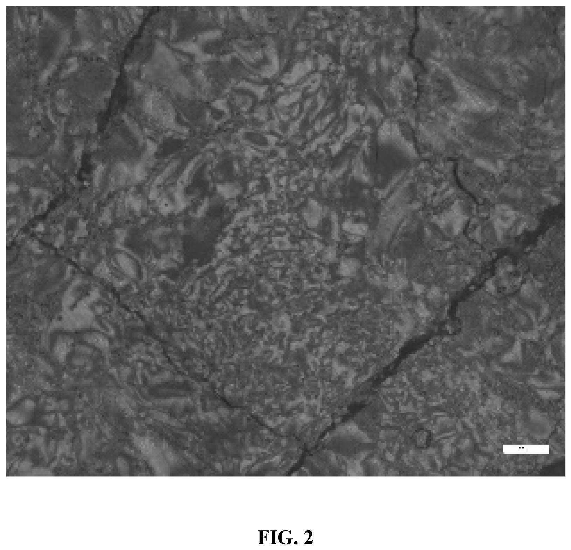

Step S1, selecting a raw material, the raw material being petroleum coke or needle coke or a mixture of petroleum coke and needle coke, and the proportion of mosaic structures in the raw material being 30%-80%. Optionally, the proportion of mosaic structures in the raw material is 40%-60%, for example, the proportion of mosaic structures in the raw material is 45%, 50%, 55%, etc. As shown in FIG. 2, this is an image of the raw material with mosaic structures under an optical microscope. The particle size of the mosaic structures is less than 30 µm. The raw material may also include long fiber structures or flake structures.

Using raw material with a mosaic structure proportion of 30%-80% to prepare the graphite negative electrode material according to the embodiments of this application, the formed graphite negative electrode material has a low OI value, which is beneficial for improving the kinetic performance of the graphite negative electrode material. However, if the proportion of mosaic structures is too high, it will hinder the rearrangement of grains during the graphitization treatment process, and may lead to a low reversible specific capacity of the formed graphite negative electrode material and a low compaction density of the electrode sheet prepared using the graphite negative electrode material, which is disadvantageous for industrial application. If the proportion of mosaic structures is too low, although it is easier to form ordered graphite materials during the graphitization treatment process, it will lead to poor kinetic performance and large expansion of the formed graphite negative electrode material. Therefore, selecting raw material with a mosaic structure proportion of 30%-80% ensures the kinetic performance of the formed graphite negative electrode material while also ensuring the reversible specific capacity and compaction density of the graphite negative electrode material.

The raw material is a raw material coke suitable for preparing single-particle long-cycle graphite negative electrode material. Further, the volatile matter of the raw material is 4-13%, the ash content is ≤0.5%, the sulfur content is ≤1.5%, and the grindability index is 60-120.

In some embodiments of this application, to ensure the coating effect of the carbon coating layer in the formed negative electrode material, the raw material is further selected from petroleum coke, needle coke, or a mixture of petroleum coke and needle coke having a volatile matter of 4-13%, an ash content of ≤0.5%, and a sulfur content of ≤1.5%.

Volatile matter refers to the mass percentage content of the substance, excluding water in the raw material, among the substances that escape as gas and liquid when a portion of the organic matter and minerals in the raw material decompose upon heating in isolation from air at a certain temperature. Ash content refers to the inorganic substance remaining after a series of physical and chemical changes occur at high temperature, where the organic components volatilize and dissipate. Ash content is necessarily the solid portion of a substance rather than the gaseous or liquid portion.

In some embodiments of this application, the grindability index of the raw material is 60-120. The grindability index as referred to in the embodiments of this application refers to 70-130, which is used to characterize the crushability and shapability of the raw material.

Step S2, performing crushing treatment and shaping treatment on the raw material to form a first powder; the main purpose of the crushing treatment is to crush the raw material to achieve the required median particle diameter.

In some embodiments of this application, the first median particle diameter of the first powder is D₁50, the first sphericity is Q₁50, the first width-to-length ratio is K₁50, then: 3<(D₁50+1+15Q₁50)/6<5; 0<(D₁50-150(K₁50-0.6))<8.

In some embodiments of this application, the convexity of the first powder is T₁50, then: 5<(D₁50+25T₁50)/7<8.

The first sphericity as referred to in the embodiments of this application is the ratio of the circumference of the equivalent projected circle of the first powder to the actual circumference. The first sphericity data measured from multiple first powder samples are subjected to cumulative distribution, and the particle diameter corresponding to when the cumulative first sphericity distribution percentage reaches 50% is Q₁50.

The first convexity as referred to in the embodiments of this application is the ratio of the projected area of the first powder particle to the total area after filling the concave portions of the particle, which is used to characterize the shape compactness of the first powder particle. The first convexity data measured from multiple first powder samples are subjected to cumulative distribution, and the particle diameter corresponding to when the cumulative first convexity distribution percentage reaches 50% is T₁50.

The first width-to-length ratio as referred to in the embodiments of this application is the ratio of the minimum FERET diameter among all tangent parallel lines of the first powder to the maximum FERET diameter among all tangent parallel lines. The first width-to-length ratio data measured from multiple first powder samples are subjected to cumulative distribution, and the particle diameter corresponding to when the cumulative first width-to-length ratio distribution percentage reaches 50% is K₁50.

Step S3, performing heat treatment on the first powder to form a second powder. The purpose of performing heat treatment on the first powder is to remove some impurities from the first powder. After the heat treatment process, the median particle diameter and surface structure of the formed second powder have a certain shrinkage relative to the first powder. However, the embodiments of this application, through the control of the heat treatment process, enable the relationships among the second median particle diameter D₂50, the second sphericity Q₂50, the second width-to-length ratio K₂50, and the second convexity T₂50 of the second powder to still meet the process requirements.

In some embodiments of this application, the second median particle diameter of the second powder is D₂50, the second sphericity is Q₂50, the second width-to-length ratio is K₂50, then: 3<(D₂50+1+125(Q₂50-0.75))/6<5; 0<[D₂50-162(K₂50-0.62)]<6.

In some embodiments of this application, the second convexity of the second powder is T₂50, then: 4<(D₂50×8+85T₂50)/29<7.

The methods for obtaining the second median particle diameter D₂50, the second sphericity Q₂50, the second width-to-length ratio K₂50, and the second convexity T₂50 are the same as the methods for obtaining the first median particle diameter D₁50, the first sphericity Q₁50, the first width-to-length ratio K₁50, and the first convexity T₁50, respectively.

The equipment for performing heat treatment on the first powder includes a tunnel kiln, rotary kiln, brick kiln, roller kiln, etc. The heat treatment temperature can be carried out under temperature conditions of 500-1400°C. Optionally, the heat treatment temperature can be 700-1200°C.

During the preparation process of the single-particle graphite negative electrode material, by matching the relationships among the sphericity, convexity, width-to-length ratio, and median particle diameter of the formed first powder and second powder, the shape of the prepared graphite negative electrode material is more spherical, with a smooth and complete surface, rounded, and fewer tips. Such a graphite negative electrode material, when applied in a lithium battery, has fewer active sites and fewer side reactions, thereby enabling the lithium battery to have superior high-temperature, storage, and long-cycle performance.

Step S4, performing graphitization treatment on the second powder to form a single-particle graphite negative electrode material, the relationship between the Raman median L of the graphite negative electrode material and the degree of graphitization G of the graphite negative electrode material being: 1.5<80(L-G/17)<6.

The graphitization treatment as referred to in the embodiments of this application refers to performing pyrolysis on the second powder after heat treatment at a high temperature, so that it forms a graphite structure with high crystallinity. During the graphitization process, as the temperature increases, impurity elements such as hydrogen and oxygen in the raw material will be removed, and the remaining carbon atoms rearrange from disorder to order, the intermolecular spacing decreases, and the crystal lattice gradually develops into an ordered graphite layered structure. This structural change enables the graphite material to have better electrical conductivity and cycle stability.

In the embodiments of this application, the equipment for performing graphitization treatment can be an Acheson crucible furnace, internal series furnace, continuous graphitization furnace, or box furnace, and the graphitization time is 15-60 h.

Further, by adjusting the power consumption, power supply time, constant power, and constant power time in the graphitization treatment process to control the reversible specific capacity, degree of graphitization, and Raman median of the formed graphite negative electrode material, by controlling the graphitization treatment process to adjust the structural uniformity of the formed entire furnace of graphite negative electrode material, and by controlling the discharge temperature of the product formed in the graphitization treatment process to control the specific surface area of the formed graphite negative electrode material.

In the embodiments of this application, when materials from different positions of the entire furnace of graphite negative electrode material are taken to test the reversible specific capacity and degree of graphitization, if the range of reversible specific capacity measured from materials at different positions of the entire furnace of graphite negative electrode material is less than 10 mAh/g, and the range of degree of graphitization is less than 2%, then the uniformity of the entire furnace of graphite negative electrode material is considered to be good.

The graphitization temperature as referred to in the embodiments of this application is higher than 2700°C, for example, the graphitization temperature is 2800-3200°C. Optionally, the graphitization temperature is 2900-3100°C.

In some embodiments of this application, the equipment for the graphitization treatment is an Acheson crucible furnace, and the process conditions of the graphitization treatment are: a power supply time of 30 h to 50 h, and a power consumption of 30000 to 48000 Kwh. For example, the power supply time can be 35 h, 40 h, 45 h, etc., and the power consumption can be 35000 Kwh, 40000 Kwh, 45000 Kwh, etc.

In some embodiments of this application, in the process of the graphitization treatment, the power supply starts increasing from an initial power, and after increasing to a set power, the set power is maintained for a specific time until the power consumption is reached, wherein the initial power supply is 1500 Kw-4000 Kw, the rate of increase of the power supply is 300-1200 kw/h, the set power is 10000 Kw-15000 Kw, and the specific time is greater than one third of the total power supply time.

By controlling the graphitization treatment process, the Raman median of the formed graphite negative electrode material is 0.05-0.15, for example, 0.06, 0.07, 0.08, 0.1, 0.12, etc. In some embodiments of this application, the relationship between the Raman median L of the graphite negative electrode material and the electrode sheet OI value I of the graphite negative electrode material needs to satisfy: 3<(I/5+20L)<5. The OI value of the graphite negative electrode material represents the orientation of graphite grains. When the graphite grain orientation and the Raman median L of the graphite negative electrode material satisfy the above relationship, the negative electrode graphite material prepared according to the embodiments of this application has small expansion and few surface side reactions.

In some embodiments of this application, the relationship between the Raman median L of the graphite negative electrode material and the reversible specific capacity R of the graphite negative electrode material needs to satisfy: 0<(0.15/L-LR/64)<3.

Another aspect of the embodiments of this application provides a graphite negative electrode material, wherein the relationship between the Raman median L of the single-particle graphite negative electrode material and the degree of graphitization G of the graphite negative electrode material needs to satisfy: 1.5<80(L-G/17)<6.

In some embodiments of this application, the relationship between the Raman median L of the graphite negative electrode material and the electrode sheet OI value I of the graphite negative electrode material needs to satisfy: 3<(I/5+20L)<5. In some embodiments of this application, the relationship between the Raman median L of the graphite negative electrode material and the reversible specific capacity R of the graphite negative electrode material needs to satisfy: 0<(0.15/L-LR/64)<3.

By matching the relationship between the Raman median and the degree of graphitization of the single-particle graphite negative electrode material, the relationship between the Raman median and the OI value, and the relationship between the Raman median and the reversible specific capacity, the internal grain integrity of the graphite negative electrode material is ensured to be high, the interlayer spacing is large, and the surface defects are few and the degree of disorder is low, so that the negative electrode material has sufficient kinetic performance during the charge-discharge process and will not undergo cycle degradation due to lithium plating; the charge-discharge cycle performance, storage capability, and high-temperature resistance of the cell products made using the graphite negative electrode material are superior, and the comprehensive performance is well achieved.

By matching the relationship between the median particle diameter of the graphite negative electrode material and the specific surface area of the graphite negative electrode material, the specific surface area of the graphite negative electrode material is controlled, so that the cells made using the graphite negative electrode material have good SEI film stability during cycling, while also having a high reversible specific capacity and compaction, and when applied in lithium batteries, have the characteristic of long life.

This application also provides a graphite negative electrode material prepared by any one of the preparation methods of the graphite negative electrode material described above.

The embodiments of this application are further described below with reference to Examples 1-4 and Comparative Examples 1-3.

### Examples 1-4:

### Example 1

Petroleum coke A was selected as the raw material. The main components of petroleum coke A are carbon atoms and hydrogen atoms, with a moisture content of ≤10%, an ash content of ≤1.0%, a volatile matter of 9-13%, and an S content of ≤1.0%; the mosaic structure proportion of petroleum coke A is 47%.

Petroleum coke A was subjected to mechanical grinding, crushing, and shaping to form a first powder, with a median particle diameter D₁50 of the first powder of 13.23 µm; the first powder was subjected to heat treatment and shaping in a tunnel kiln to form a second powder, with the heat treatment and shaping temperature of 1100°C, and then the second powder was subjected to graphitization using an Acheson crucible furnace to form a graphite negative electrode material. In the graphitization treatment process, the total power consumption was 36900 KWh, the total graphitization time was 38 h, the graphitization constant power was 12500 Kw, and after reaching the power of 12500 Kw, the constant power time was 18 h. When the second powder after graphitization was cooled and discharged from the furnace, the discharge temperature was 230°C. After discharge, the second powder after graphitization was screened and demagnetized to obtain the required graphite negative electrode material. The median particle diameter D50 of the graphite negative electrode material prepared in this example was 12.11 µm, the particle size distribution range was 0.88-35.72 µm, the tap density was 1.30 g/cm³, and the specific surface area was 1.32 m²/g.

### Example 2

This example differs from Example 1 in that: Step (1) used needle coke A. The main components of needle coke A are carbon atoms and hydrogen atoms, with a moisture content of ≤8%, an ash content of ≤0.5%, a volatile matter of 5-8%, and an S content of ≤0.5%; the mosaic structure proportion is 40%. The D50 median particle diameter of the graphite negative electrode material prepared in this example was 11.88 µm, the particle size distribution range was 1.04-38.35 µm, the tap density was 1.31 g/cm³, and the specific surface area was 1.20 m²/g.

### Example 3

This example differs from Example 1 in that: Step (1) mixed petroleum coke B and needle coke A in a 5:5 ratio as the raw material for crushing. The main components of petroleum coke B are carbon atoms and hydrogen atoms, with a moisture content of ≤10%, an ash content of ≤1.0%, a volatile matter of 9-13%, and an S content of ≤1.0%; the mosaic structure proportion of petroleum coke B is 67%. The main components of needle coke A are carbon atoms and hydrogen atoms, with a moisture content of ≤8%, an ash content of ≤0.5%, a volatile matter of 5-8%, and an S content of ≤0.5%; the mosaic structure proportion is 40%. The D50 median particle diameter of the graphite negative electrode material prepared in this example was 14.47 µm, the particle size distribution range was 1.10-56.90 µm, the tap density was 1.34 g/cm³, and the specific surface area was 0.97 m²/g.

### Example 4

This example differs from Example 1 in that:
When performing graphitization on the second powder, the graphitization treatment process was different from Example 1: An Acheson crucible furnace was used to perform graphitization on the second powder, the total power consumption was 43000 KWh, the total graphitization time was 39 h, the initial power supply was 2000 Kw, the set power in the graphitization process was 14000 Kw, and after reaching the set power of 14000 Kw, the time for maintaining the set power was 17 h. When the second powder after graphitization was cooled and discharged from the furnace, the discharge temperature was 250°C. The D50 median particle diameter of the graphite negative electrode material prepared in this example was 10.33 µm, the particle size distribution range was 0.77-28.93 µm, the tap density was 1.20 g/cm³, and the specific surface area was 1.85 m²/g.

### Comparative Example 1

The raw material used was petroleum coke C, with a volatile matter of 13.1% and a mosaic structure proportion of 24%. After crushing, heat treatment, and graphitization, the D50 median particle diameter of the prepared graphite negative electrode material was 16.91 µm, the particle size distribution range was 0.75-68.93 µm, the tap density was 1.03 g/cm³, and the specific surface area was 1.56 m²/g.

### Comparative Example 2

The raw material used was petroleum coke A. After crushing and heat treatment, graphitization was performed using an Acheson crucible furnace. The graphitization process was: the total power consumption was 28000 KWh, the total graphitization time was 32 h, the set power in the graphitization process was 10000 Kw, and after reaching the set power of 10000 Kw, the time for maintaining the set power was 8 h. When the second powder after graphitization was cooled and discharged from the furnace, the discharge temperature was 450°C. The D50 median particle diameter of the prepared graphite negative electrode material was 11.12 µm, the particle size distribution range was 0.88-35.93 µm, the tap density was 1.22 g/cm³, and the specific surface area was 1.98 m²/g.

### Comparative Example 3

The raw material used was petroleum coke A. After crushing and shaping, the first median particle diameter D₁50 of the formed first powder was 5.34 µm, the Q₁50 of the first powder was 0.76, the K₁50 was 0.68, and the T₁50 was 0.86. Then, graphitization treatment was directly performed on the first powder to form a graphite negative electrode material. The tap density of the finally formed graphite negative electrode material was 1.02 g/cm³, and the specific surface area was 2.85 m²/g.

**Table 1**

| **No.** | **D50 (µm)** | **Q₂50** | **K₂50** | **T₂50** | **Tap density (g/cm³)** | **Specific surface area (m²/g)** |
|---|---|---|---|---|---|---|
| Example 1 | 12.1 1 | 0.83 | 0.67 5 | 0.91 2 | 1.30 | 1.32 |
| Example 2 | 11.8 8 | 0.82 | 0.66 2 | 0.92 1 | 1.31 | 1.20 |
| Example 3 | 14.4 7 | 0.85 | 0.68 3 | 0.92 8 | 1.34 | 0.97 |
| Example 4 | 10.3 3 | 0.83 | 0.67 2 | 0.91 0 | 1.20 | 1.85 |
| Comp. Ex. 1 | 16.9 1 | 0.79 | 0.71 8 | 0.90 0 | 1.03 | 1.56 |
| Comp. Ex. 2 | 11.1 2 | 0.81 | 0.66 7 | 0.91 2 | 1.22 | 1.98 |
| Comp. Ex. 3 | 5.04 | - | - | - | 1.02 | 2.85 |

Table 1 shows the performance testing of the graphite negative electrode materials formed in Examples 1-4 and Comparative Examples 1-3, wherein:

The median particle diameter D50 of the graphite negative electrode material was tested using a laser particle size distribution instrument MS3000. Compared with Comparative Examples 1-3, the particle sizes of the graphite negative electrode materials in Examples 1-4 are moderate, and the distribution is relatively uniform.

The second sphericity Q₂50, the second width-to-length ratio K₂50, and the second convexity T₂50 of the second powder after graphitization were tested using a particle shape analyzer QICPIC, wherein the second sphericity Q₂50, the second width-to-length ratio K₂50, and the second convexity T₂50 satisfy: 3<(D₂50+1+125(Q₂50-0.75))/6<5; 0<(D₂50-150(K₂50-0.6))<8; 5<(D₂50+25T₂50)/7<8.

The specific surface area of the graphite negative electrode material was tested using a specific surface area analyzer NOVATouch2000. The specific surface areas of the graphite negative electrode materials prepared in Examples 1-4 were lower than those of the comparative examples.

The tap density of the graphite negative electrode material was tested using a tap density analyzer TF-100B. The tap densities were all higher than 1.0 g/cm³.

**Table 2**

| **No.** | **Raman median** | **No.2s** | **No.7s** | **P_{0.1}** | **P_{0.1-1.0}** | **P_{1.0+}** |
|---|---|---|---|---|---|---|
| Example 1 | 0.10 8 | 0.07 5 | 0.14 6 | 44.9 % | 53.6 % | 1.2% |
| Example 2 | 0.11 2 | 0.08 5 | 0.16 1 | 43.4 % | 55.7 % | 1.2% |
| Example 3 | 0.12 5 | 0.08 9 | 0.15 1 | 41.3 % | 57.1 % | 1.2% |
| Example 4 | 0.08 2 | 0.06 1 | 0.12 5 | 48.7 % | 51.1 % | 1.0% |
| Comp. Ex. 1 | 0.09 0 | 0.06 3 | 0.14 4 | 51.1 % | 47.5 % | 1.0% |
| Comp. Ex. 2 | 0.14 5 | 0.07 9 | 0.14 5 | 40.2 % | 57.7 % | 1.1% |
| Comp. Ex. 3 | 0.13 5 | 0.07 7 | 0.15 5 | 40.9 % | 57.2 % | 1.2% |

Table 2 shows the Raman median and Raman value distribution of the graphite negative electrode materials formed in Examples 1-4 and Comparative Examples 1-3.

The confocal Raman spectrum of the graphite negative electrode material was tested using a Raman device (Renishaw). The G peak ("Graphite" band) is located at approximately 1580 cm⁻¹, corresponding to the E2g vibration mode, and the D peak ("Defect" band) is located at approximately 1360 cm⁻¹, corresponding to the disordered carbon ring structure. Each Raman test scanned 2500 points. The Raman value = D peak/G peak; since 2500 points are tested for each Raman test, there are 2500 sets of original Raman value data.

The Raman values are arranged from small to large. N_{0.25} is the 625th data point from the smallest to the largest Raman value, N_{0.75} is the 1875th data point from the smallest to the largest Raman value, and the Raman data concentration = N_{0.73}-N_{0.25}. The smaller the Raman data concentration value, the more concentrated the structural surface structure of the material. When the concentration value is less than 0.08, it indicates that the concentration of the graphite negative electrode material is superior.

The Raman values are arranged from small to large. P_{0.1} is the number of data points with a Raman value ≤0.1 divided by 2500; P_{0.1-1.0} is the number of data points with a Raman value greater than 0.1 and less than 1.0 divided by 2500; P_{1.0+} is the number of data points with a Raman value ≥1.0 divided by 2500. Since the D peak represents the disordered structure, a larger D peak results in a higher Raman value, which proves that the surface of the graphite negative electrode material is more disordered. If P_{0.1}≥80%, and P_{1.0+}<1%, it indicates that the surface of the graphite negative electrode material is ordered with few defects, which is beneficial for the long cycle performance of the graphite negative electrode material.

The graphite negative electrode materials prepared in Examples 1-4 have a concentration <0.1, stable structure, and improved cycle performance.

**Table 3**

| **No.** | **Degree of graphitization** | **Electrode sheet OI value** | **Reversible specific capacity (mAh/g)** | **First discharge efficiency (%)** | **0.5P constant power charge/discharge 1000 cycles retention (%)** | **0.5P constant power charge/discharge 5000 cycles retention (%)** |
|---|---|---|---|---|---|---|
| Example 1 | 93.50% | 6.7 | 345 | 94.5 | 96.1% | 86.6% |
| Example 2 | 92.80% | 10 | 343 | 94.1 | 96.3% | 85.8% |
| Example 3 | 92.00% | 7.2 | 342 | 94.7 | 95.1% | 86.7% |
| Example 4 | 94.60% | 14.5 | 350 | 94.7 | 95.8% | 85.1% |
| Comp. Ex. 1 | 94.50% | 22.8 | 347 | 92.4 | 84.3% | 74.5% |
| Comp. Ex. 2 | 89.50% | 6.1 | 331 | 94.2 | 82.1% | 72.7% |
| Comp. Ex. 3 | 93.70% | 8.1 | 339 | 93.8 | 83.2% | 73.7% |

Table 3 shows the data of the degree of graphitization, electrode sheet OI value, reversible specific capacity, first discharge efficiency, 0.5P constant power charge/discharge cycle 1000 cycles reversible specific capacity retention rate, and 0.5P constant power charge/discharge cycle 5000 cycles reversible specific capacity retention rate of the graphite negative electrode materials prepared in Examples 1-4 and Comparative Examples 1-3, wherein:

The electrode sheet OI value and the degree of graphitization of the graphite negative electrode material were tested using a Bruker device.

The graphite negative electrode materials prepared in Examples 1-4 and Comparative Examples 1-3 were respectively used to prepare half cells according to the following method:
According to a mass ratio of 95:1:2:2, the negative electrode materials, conductive carbon black SP, CMC, and SBR prepared in Examples 1-4 and Comparative Examples 1-3 were respectively weighed, stirred uniformly in water to prepare a negative electrode slurry, and uniformly coated on a copper foil using a coater. The coated electrode sheet was placed in a vacuum drying oven at a temperature of 110°C for vacuum drying for 4 hours, and then pressed to form a negative electrode; wherein the compaction density = electrode sheet mass / (thickness of the electrode sheet after rolling - current collector thickness). CR-2430 button cells were assembled in a Braun glove box filled with argon, the electrolyte was 1M LiPF₆+EC:EMC:DMC=1:1:1 (volume ratio), and a metal lithium sheet was used as the counter electrode.

The prepared half cells were subjected to discharge reversible specific capacity and first discharge efficiency testing on an Arbin BT2000 battery tester. Under a charge-discharge voltage range of 0.005 V to 1.0 V and a charge-discharge rate of 0.1 C, the discharge reversible specific capacity and first discharge efficiency were measured according to conventional testing methods in the art. The test results show that the low-cost graphite negative electrode materials prepared in Examples 1-4, when used to prepare batteries, have a high discharge reversible specific capacity, and the first discharge efficiency is also high (≥93%).

The graphite materials prepared in Examples 1-4 and Comparative Examples 1-3 were respectively used to prepare full cells for testing according to the following method:

According to a mass ratio of negative electrode material:
CMC:SP:SBR=96:1.2:1:1.8, the negative electrode materials, conductive carbon black SP, CMC, and SBR prepared in Examples 1-4 and Comparative Examples 1-3 were respectively weighed, stirred uniformly in water to prepare a negative electrode slurry, and uniformly coated on a copper foil using a coater. The coated electrode sheet was placed in a vacuum drying oven at a temperature of 90°C for vacuum drying for 48 hours, and then pressed to form a negative electrode; wherein the compaction density = electrode sheet mass / (thickness of the electrode sheet after rolling - current collector thickness). Electrolyte: 1M LiPF₆, main additives: EC, EMC, DMC, FEC. The negative electrode sheets, positive electrode sheets, etc. were stacked into soft pack cells, with a reversible specific capacity of 1000 mAh. The prepared full cells were subjected to discharge reversible specific capacity and first discharge efficiency testing. Under a charge-discharge voltage range of 0.005 V to 2.5 V and constant power 0.5P charging/0.5P discharging conditions, the normal temperature cycling performance at 25°C was tested according to conventional testing methods in the art. The graphite negative electrode materials prepared in Examples 1-4 cycled for 5000 cycles, with a reversible specific capacity retention rate >85%.

Finally, it should be understood that the embodiments of the application disclosed herein are illustrations of the principles of the embodiments of this application. Other modified embodiments are also within the scope of this application. Therefore, the embodiments disclosed in this application are merely examples and not limitations. Those skilled in the art can adopt alternative configurations according to the embodiments in this application to implement the application herein. Therefore, the embodiments of this application are not limited to those embodiments that have been precisely described in the application.

## Claims

1. A preparation method of a graphite negative electrode material, comprising:
selecting a raw material, the raw material being petroleum coke or needle coke or a mixture of petroleum coke and needle coke, and the proportion of mosaic structures in the raw material being 30%-80%;
performing crushing treatment and shaping treatment on the raw material to form a first powder;
performing heat treatment on the first powder to form a second powder;
performing graphitization treatment on the second powder to form a single-particle graphite negative electrode material, the relationship between the Raman median L of the graphite negative electrode material and the degree of graphitization G of the graphite negative electrode material being: 1.5<80(L-G/17)<6.

2. The preparation method of the graphite negative electrode material according to claim 1, wherein the volatile matter of the raw material is 4-13%, the ash content is ≤0.5%, and the sulfur content is ≤1.5%.

3. The preparation method of the graphite negative electrode material according to claim 2, wherein the grindability index of the raw material is 60-120.

4. The preparation method of the graphite negative electrode material according to claim 1, wherein the first median particle diameter of the first powder is D₁50, the first sphericity is Q₁50, the first width-to-length ratio is K₁50, then: 3<(D₁50+1+15Q₁50)/6<5; 0<(D₁50-150(K₁50-0.6))<8.

5. The preparation method of the graphite negative electrode material according to claim 4, wherein the convexity of the first powder is T₁50, then: 5<(D₁50+25T₁50)/7<8.

6. The preparation method of the graphite negative electrode material according to claim 1, wherein the second median particle diameter of the second powder is D₂50, the second sphericity is Q₂50, the second width-to-length ratio is K₂50, then: 3<(D₂50+1+125(Q₂50-0.75))/6<5; 0<(D₂50-150(K₂50-0.6))<8.

7. The preparation method of the graphite negative electrode material according to claim 6, wherein the second convexity of the second powder is T₂50, then: 5<(D₂50+25T₂50)/7<8.

8. The preparation method of the graphite negative electrode material according to claim 1, wherein the relationship between the Raman median L of the graphite negative electrode material and the electrode sheet OI value I of the graphite negative electrode material satisfies: 3<(I/5+20L)<5; and/or the relationship between the Raman median L of the graphite negative electrode material and the reversible specific capacity R of the graphite negative electrode material satisfies: 0<(0.15/L-LR/64)<3.

9. The preparation method of the graphite negative electrode material according to claim 1, wherein the equipment for the graphitization treatment is an Acheson crucible furnace, and the process conditions of the graphitization treatment are: a power supply time of 30 h to 50 h, and a power consumption of 30000 to 48000 Kwh.

10. The preparation method of the graphite negative electrode material according to claim 9, wherein in the process of the graphitization treatment, the power supply starts increasing from an initial power, and after increasing to a set power, the set power is maintained for a specific time until the power consumption is reached, wherein the initial power supply is 1500 Kw-4000 Kw, the rate of increase of the power supply is 300-1200 kw/h, the set power is 10000 Kw-15000 Kw, and the specific time is greater than one third of the total power supply time.

11. A graphite negative electrode material, wherein the relationship between the Raman median L of the single-particle graphite negative electrode material and the degree of graphitization G of the graphite negative electrode material satisfies: 1.5<80(L-G/17)<6.

12. The graphite negative electrode material according to claim 11, wherein the relationship between the Raman median L of the graphite negative electrode material and the electrode sheet OI value I of the graphite negative electrode material satisfies: 3<(I/5+20L)<5.

13. The graphite negative electrode material according to claim 11, wherein the relationship between the Raman median L of the graphite negative electrode material and the reversible specific capacity R of the graphite negative electrode material satisfies: 0<(0.15/L-LR/64)<3.

14. A graphite negative electrode material, prepared by the method according to any one of claims 1 to 10.

15. A lithium-ion battery, comprising a negative electrode, the negative electrode being made from the graphite negative electrode material according to any one of claims 11 to 13.
